# EUROPÄISCHE PATENTANMELDUNG

(11) **EP 0 727 145 A1**
(43) Veröffentlichungstag der Anmeldung: **21.08.1996**
(21) Anmeldenummer: 95102217.7
(22) Anmeldetag: 17.02.1995
(51) Int. Cl.: A23G 1/00, A23G 3/00, A23G 3/30

(54) **Geschenkartikel**

(71) Anmelder: Engber, Noam, D-55124 Mainz (DE)
(72) Erfinder: Engber, Noam, D-55124 Mainz (DE)
(74) Vertreter: Stenger, Watzke & Ring Patentanwälte

(57) **Zusammenfassung**

Um einen Geschenkartikel (1) bereitzustellen, der einfach herstellbar ist, eine große Variationsbreite bei gesteigerter Originalität bietet und einen großen Überraschungseffekt mit sich bringt, wird ein Geschenkartikel, bestehend aus einem Gebrauchsgegenstand (8) und einem für einen solchen Gebrauchsgegenstand üblicherweise geeigneten und bestimmten Verpackungsteil (2) angegeben, wobei innerhalb des Verpackungsteils wenigstens ein Lebensmittel angeordnet ist.

## Beschreibung

Die Erfindung betrifft einen Geschenkartikel.

Geschenkartikel sind Artikel unterschiedlichster Art, die zu den verschiedensten Anlässen bestimmten Personen geschenkt werden. Die Problematik des Schenkens allgemein in einer industrialisierten Konsumgesellschaft ist gemeinhin bekannt. Eine umfangreiche Industrie ist damit beschäftigt, geeignete Artikel zu produzieren und zu vertreiben.

Üblicherweise bestehen Geschenke aus Gebrauchsgegenständen, aus Lebensmitteln der unterschiedlichsten Art oder aus dekorativen Elementen. Die Grenzen sind jeweils schwimmend. So gibt es eine große Zahl von vorsätzlich überaus dekorativ gestalteten Gebrauchsgegenständen, die sich damit in verfeinerter Form zum Geschenk besser eignen als die Gebrauchsgegenstände in ihrer ursprünglichen technischen Gestalt. Üblicherweise werden die genannten Geschenkelemente miteinander kombiniert. So finden sich in sogenannten Präsentkörben neben Lebensmitteln auch kleinere Gebrauchsgegenstände, beispielsweise Bücher, Feuerzeuge und dergleichen. Umgekehrt werden Gebrauchsgegenstände häufig durch die Beilage von Lebensmitteln, vorrangig Süßigkeiten, Alkoholika und dergleichen aufgewertet. Auch ist es bekannt, Geschenke durch eine intensive Ausgestaltung der Geschenkverpackung selbst aufzuwerten, beispielsweise eine Vielzahl von Gegenständen in einen Luftballon einzubringen oder dergleichen. Alle genannten Kombinationen sollen die Originalität erhöhen und die Überraschungseffekte beim Beschenkten intensivieren. Ein Hauptnachteil aller beschriebenen Geschenkartikelarten besteht darin, daß diese von der schenkenden Person zusammengestellt und geplant werden müssen. Darüber hinaus können die einzelnen Geschenkelemente nur im beschränkten Maße einen Überraschungseffekt erzielen, so daß der Überraschungseffekt durch die möglichst originelle Kombination der Elemente erzielt werden muß. Ein Buch als solches hat nur einen begrenzten Überraschungsgrad, was in gleicher Weise auch für eine Pralinenschachtel gilt. Eine geeignete Kombination kann den Überraschungseffekt erhöhen. Dies wird noch verstärkt durch eine originelle Verpackung. Jedoch wird durch die Einzelelemente schnell eine Originalitätsgrenze und auch eine Grenze der Variationsmöglichkeiten erreicht, die Gestaltbarkeit auf das Verpackungsmaterial, dessen Gestaltung oder Eigenschaften verlagert und der Überraschungseffekt insgesamt verkleinert, was insbesondere in Konsumgesellschaften zu beobachten ist.

Es besteht somit ein grundsätzlicher Bedarf an originellen Geschenkartikeln.

Davon ausgehend liegt der vorliegenden Erfindung die **Aufgabe** zugrunde, einen Geschenkartikel bereitzustellen, der einfach herstellbar ist, eine große Variationsbreite bei gesteigerter Originalität bietet und einen großen Überraschungseffekt mit sich bringt.

Zur technischen **Lösung** wird ein Geschenkartikel, bestehend aus einem Gebrauchsgegenstand und einem für einen solchen Gebrauchsgegenstand üblicherweise geeigneten und bestimmten Verpackungsteil angegeben, wobei innerhalb des Verpackungsteils wenigstens ein Lebensmittel angeordnet ist.

Die Besonderheit des erfindungsgemäßen Geschenkartikels besteht darin, daß im Gegensatz zu der Erwartung der Beschenkten in der standardgemäßen Verpackung nicht einfach der Gebrauchsgegenstand, sondern ersatzweise oder zusätzlich ein Lebensmittel enthalten ist.

Der Begriff Lebensmittel wird im Sinne der vorliegenden Erfindung als Oberbegriff für alle Arten von Nahrungs- und Genußmitteln verstanden. Er ist auch nicht beschränkt auf mögliche Aggregatzustände des Lebensmittels. Es sollen darunter alle eßbaren, kaubaren, trinkbaren oder sonstwie genießbaren Stoffe verstanden werden, die in der dargebotenen Form direkt oder nach einer entsprechenden Zubereitung gebraucht werden können.

Der Begriff Gebrauchsgegenstand soll gemäß der Erfindung in einem weiten Sinne verstanden werden, das heißt er soll alle Arten von technischen Gegenständen umfassen, die im Rahmen eines Präsentes verwendet werden können. Dazu bieten sich in heutiger Zeit alle Arten von Speichermedien für die Unterhaltungselektronik an, beispielsweise Disketten, CDs, Kassetten und dergleichen, Elemente der modernen Gebrauchselektronik, wie kleinere CD-Abspielgeräte, mobile Telefone, Uhren und dergleichen, Bücher, Werkzeuge, Haushaltsgegenstände und so weiter.

Unter Verpackungsteil soll im wesentlichen ein bestimmungsgemäßes Verpackungsteil verstanden werden. So sind Platten, Kassetten und dergleichen in üblicherweise bekannten Kunststoffverpackungen enthalten, die im Sinne der Erfindung in der ursprünglichen oder einer aus Vereinfachungsgründen abgewandelten Form verwendet werden können. Alle handelsüblichen Verpackungsteile von Gebrauchsgegenstände sind im Sinne der Erfindung in der ursprünglichen oder einer abgewandelten Form verwendbar.

Die im Geschenkartikel enthaltenen Lebensmittel können alle Arten von Aggregatzustanden bei Normaltemperaturen haben. So können Pulver in entsprechenden Beuteln, Tüten oder dergleichen in die gewünschte Form gebracht im Verpackungsteil angeordnet werden. Das gleiche gilt für Flüssigkeiten. Aus üblicherweise festen Materialien können ebenfalls entsprechende Formen hergestellt werden. Die Lebensmittel werden bei Bedarf für sich alleine nach lebensmitteltechnischen Vorschriften verpackt und in dieser Form in das Verpackungsteil eingebracht.

Gemäß einem vorteilhaften Vorschlag der Erfindung ist der zum Geschenkartikel gehörige Gebrauchsgegenstand wenigstens teilweise aus wenigstens einem Lebensmittel gebildet. In besonders vorteilhafter Weise ist der Gebrauchsgegenstand aus einem Lebensmittel nachgebildet. So können beispielsweise einfache technische Gegenstände aus bei normalen Temperaturen üblicherweise festen Lebensmitteln gebildet werden. Dazu bieten sich Schokoladen, Süßigkeiten aller Art, Kaugummi u. s. w. an. Auch ist es möglich, Aufnahmebeutel in der entsprechenden Form auszubilden und mit Kaffeepulver, Alkoholika oder dergleichen zu füllen. Die durch die Lebensmittel nachgebildeten Gebrauchsgegenstände werden dann in üblicher Weise in das bestimmungsgemäße Verpackungsteil eingebracht und verschenkt. Die beschenkte Person wird zumindest sehr genau überprüfen müssen, welcher Art der Geschenkartikel ist. Eine Folge von Überraschungseffekten ist vorprogrammiert.

Weiterhin wird mit Vorteil vorgeschlagen, daß das Verpackungsteil wenigstens teilweise aus wenigstens einem Lebensmittel gebildet ist. Mit Vorteil kann weiterhin das gesamte Verpackungsteil aus wenigstens einem Lebensmittel nachgebildet sein. Die beschriebenen Vorteile lassen sich durch entsprechende Kombinationen erfindungsgemäßer Gebrauchsgegenstände und Verpackungsteile verstärken.

Mit Vorteil wird vorgeschlagen, daß das Verpackungsteil wenigstens teilweise durchsichtig ist. Einerseits kann die Oberflächengestaltung des Gebrauchsgegenstandes so gewählt sein, daß sich ein entsprechender optischer Effekt ergibt, andererseits können gemäß einem Vorschlag der Erfindung die Verpackungsteile im durchsichtigen Bereich mit Informationselementen unterlegt werden. Dabei kann es sich um allgemeine oder persönliche Informationen handeln.

Die Informationselemente können auf das Verpackungsteil aufgeklebt sein, direkt aufgedruckt, auf der Lebensmitteloberfläche ausgestaltet oder in die Verpackung sichtbar mit eingelegt sein.

Mit den erfindungsgemäßen Merkmalen läßt sich ein neuartiger Geschenkartikel herstellen, der allen Ansprüchen an moderne Geschenkartikel genügt, eine große Variationsbreite und eine gesteigerte Originalität bereitstellt und die Überraschungseffekte verstärkt.

In vorteilhafter Weise wird vorgeschlagen, daß der Gebrauchsgegenstand eine Scheibenform hat, konkretisiert kann in besonders vorteilhafter Weise der Gebrauchsgegenstand einer CD nachgebildet sein. In diesem Falle wird als Verpackungsteil eine an sich bekannte CD-Hülle in der ursprünglichen oder im Sinne des Geschenkartikels variierten Form verwendet.

Die beschriebene Konkretisierung läßt sich besonders einfach herstellen, wobei sich dieser Gedanke auf eine Vielzahl entsprechender Gebrauchsgegenstände übertragen läßt.

Weitere Vorteile und Merkmale der Erfindung ergeben sich aus der folgenden Beschreibung anhand der Figuren. Dabei zeigen:
- Figur 1: eine perspektivische Darstellung eines Ausführungsbeispiels für einen Geschenkartikel und
- Figur 2: eine Darstellung gemäß Figur 1 mit geöffnetem Verpackungsteil.

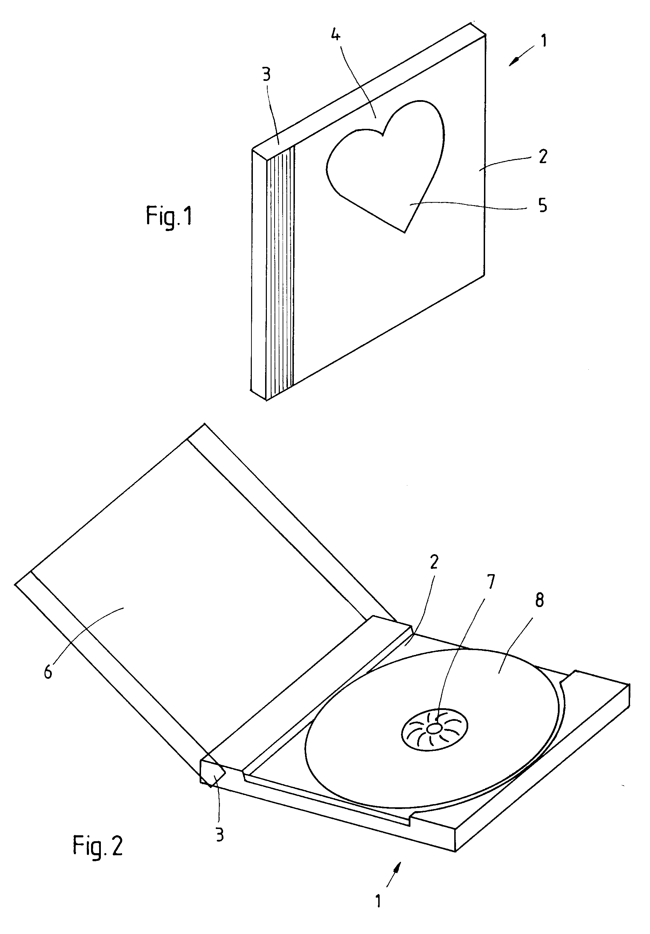

Als Ausführungsbeispiel für einen Geschenkartikel nach der vorliegenden Erfindung ist in den Figuren 1 und 2 eine CD gezeigt. Der Geschenkartikel 1 besteht aus einer CD-Hülle 2, welche in an sich bekannter Weise ein Gelenk 3 zum Aufklappen eines Deckels 4 aufweist. Der Deckel 4 ist ebenso wie fast alle übrigen Bereiche der CD-Hülle 2 aus durchsichtigem Kunststoff gebildet, so daß hier Informationsträger 5 angeordnet werden können. Auf diesen Informationsträgern können allgemeine oder persönliche Informationen angeordnet sein, wie beispielsweise der Anlaß des Geschenks, Grüße und dergleichen. Auf der Informationsträgerrückseite 6 können ebenfalls Informationen angeordnet sein, wie beispielsweise eine persönliche Nachricht, Namen, Unterschriften u. s. w.

Die CD-Hülle 2 weist in an sich bekannter Weise ein Aufnahmeelement 7 in seinem Inneren auf, welches normalerweise der Aufnahme einer CD dient. Im vorliegenden Falle ist die Scheibe 8 aus einem bei Normaltemperatur festen Lebensmittel gebildet, beispielsweise aus Kaugummi, Schokolade oder dergleichen.

Zusätzlich kann die Scheibe 8, die nach lebensmitteltechnischen Vorschriften hergestellt und in die CD-Hülle eingebracht ist, bedruckt sein, mit Aufklebern versehen oder dergleichen. Auch können zusätzliche entsprechende Elemente, beispielsweise Sticker u. s. w. in der Verpackung enthalten sein.

Das gezeigte Ausführungsbeispiel einer CD als Abwandlung für einen Geschenkartikel durch Einbringen eines entsprechend geformten Lebensmittels läßt sich beliebig auf andere Gebrauchsgegenstände übertragen.

### Bezugszeichenliste

- 1: Geschenkartikel
- 2: CD-Hülle
- 3: Gelenk
- 4: Deckel
- 5: Informationsträger
- 6: Informationsträgerrückseite
- 7: Aufnahmeelement
- 8: Scheibe

## Patentansprüche

1. Geschenkartikel (1), bestehend aus einem Gebrauchsgegenstand (8) und einem für einen solchen Gebrauchsgegenstand üblicherweise geeigneten und bestimmten Verpackungsteil (2), wobei innerhalb des Verpackungsteils (2) wenigstens ein Lebensmittel angeordnet ist.

2. Geschenkartikel nach Anspruch 1, dadurch gekennzeichnet, daß der Gebrauchsgegenstand wenigstens teilweise aus wenigstens einem Lebensmittel gebildet ist.

3. Geschenkartikel nach einem der vorhergehenden Ansprüche, dadurch gekennzeichnet, daß der Gebrauchsgegenstand (8) aus Lebensmitteln nachgebildet ist.

4. Geschenkartikel nach einem der vorhergehenden Ansprüche, dadurch gekennzeichnet, daß das Verpackungsteil wenigstens teilweise aus wenigstens einem Lebensmittel gebildet ist.

5. Geschenkartikel nach einem der vorhergehenden Ansprüche, dadurch gekennzeichnet, daß das Verpackungsteil aus Lebensmitteln nachgebildet ist.

6. Geschenkartikel nach einem der vorhergehenden Ansprüche, dadurch gekennzeichnet, daß das Verpackungsteil wenigstens teilweise durchsichtig ausgebildet ist.

7. Geschenkartikel nach einem der vorhergehenden Ansprüche, dadurch gekennzeichnet, daß dieser einen Informationsträger (5) aufweist.

8. Geschenkartikel nach Anspruch 7, dadurch gekennzeichnet, daß der Informationsträger in das Verpackungsteil eingelegt ist.

9. Geschenkartikel nach einem der vorhergehenden Ansprüche, dadurch gekennzeichnet, daß der aus Lebensmitteln nachgebildete Gebrauchsgegenstand scheibenförmig ist.

10. Geschenkartikel nach einem der vorhergehenden Ansprüche, dadurch gekennzeichnet, daß das Verpackungsteil eine CD-Hülle ist.
